# EUROPEAN PATENT APPLICATION

(11) **EP 2 790 390 A1**
(43) Date of publication of application: **15.10.2014**
(21) Application number: 13758125.2
(22) Date of filing: 06.03.2013
(51) Int. Cl.: H04M 1/725

(54) **DATA TRANSMISSION METHOD AND DEVICE**

(30) Priority: 07.03.2012 CN 201210057945
(71) Applicant: Huawei Device Co., Ltd., Shenzhen, Guangdong 518129 (CN)
(72) Inventor: CHEN, Xiaochen, Shenzhen Guangdong 518129 (CN)
(74) Representative: Goddar, Heinz J.
(86) International application number: PCT/CN2013/072215
(87) International publication number: WO 2013/131475

(57) **Abstract**

The embodiments of the present invention disclose a data transmission method, including: receiving, by a data transmission device, a user gesture; and, when the user gesture is the same as a preset data transmission action, transmitting, by the data transmission device, data to be transmitted to a receiving device. The embodiments of the present invention also disclose a data transmission device. By using the method and the device in the embodiments of the present invention, data transmission can be implemented conveniently and quickly, which is convenient for users to use and improves user experience.

## Description

This application claims priority to Chinese Patent Application CN 201210057945.8, filed with the Chinese Patent Office on March 07, 2012 and entitled "DATA TRANSMISSION METHOD AND DEVICE", which is incorporated herein by reference in its entirety.

### TECHNICAL FIELD

The present invention relates to the mobile communication field, and in particular, to a data transmission method and device.

### BACKGROUND

At present, a D2D (Device to Device, device to device) connection refers to a direct connection between two devices, other than a connection by using intermediate equipment. Manners that implement the D2D connection include NFC (Near Field Communication, near field communication), BT (Bluetooth, Bluetooth) and WiFi Direct (Wireless Fidelity Direct, Wireless Fidelity Direct). At present, after a D2D connection between two devices is successful set up, a process where one device transmits data to the other device generally includes: a user selects data which needs to be transmitted to the other device, invokes an operation menu, and selects a "send" option on the operation menu; and then the user selects a device to which the data needs to be transmitted, so as to implement transmission of the data to the other device. In practical applications, the inventor finds that the foregoing implementation of data transmission requires repeated calling of the operation menu to perform connection and transmission, and therefore a data sharing operation becomes complicated and difficult, which is not helpful for an entry-level user to fulfill implementation and causes poor user experience.

### SUMMARY

Embodiments of the present invention provide a data transmission method and device, which can solve the problem of complicated and difficult-to-operate data sharing.

An embodiment of the present invention provides a data transmission method, including:
receiving, by a data transmission device, a user gesture;
transmitting, by the data transmission device when the user gesture is the same as a preset data transmission action, data to be transmitted to a receiving device.

Accordingly, an embodiment of the present invention further provides a data transmission device, including:
a user gesture receiving unit, configured to receive a user gesture; and
a processing unit, configured to, when the user gesture received by the user gesture receiving unit is the same as a preset data transmission action, transmit data to be transmitted to a receiving device.

Implementing the embodiments of the present invention has the following advantages:

In the embodiments of the present invention, when a user gesture received by a data transmission device is the same as a preset data transmission action, data to be transmitted is directly transmitted to a receiving device without a need of menu selection by a user. For example, when a user operation received by the data transmission device is at least one of a contact action between the data transmission device and the receiving device, a turning action on the data transmission device, and a dragging action on the data to be transmitted, the data can be directly transmitted to the receiving device without the need of multiple menu selections by the user, so that data transmission can be implemented conveniently and quickly, which is convenient for users to use and improves user experience.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a first embodiment of a data transmission method according to the present invention;
FIG. 2 is a schematic diagram of a data transmission process according to an embodiment of the present invention;
FIG. 3 is another schematic diagram of a data transmission process according to an embodiment of the present invention;
FIG. 4 is still another schematic diagram of a data transmission process according to an embodiment of the present invention;
FIG. 5 is a schematic flowchart of a second embodiment of the data transmission method according to the present invention;
FIG. 6 is a schematic flowchart of a third embodiment of the data transmission method according to the present invention;
FIG. 7 is a schematic flowchart of a data transmission device according to a first embodiment of the present invention;
FIG. 8 is a schematic structural diagram of the data transmission device according to a second embodiment of the present invention; and
FIG. 9 is a schematic structural diagram of the data transmission device according to a third embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The core principle of a data transmission method in the embodiments of the present invention is: when data to be transmitted in a data transmission device needs to be transmitted to a receiving device, a transmission action of the data to be transmitted is triggered by a user gesture. For example, when the user gesture is the same as at least one of a contact action between the data transmission device and the receiving device, a turning action on the data transmission device, and a dragging action on the data to be transmitted, the data to be transmitted is directly transmitted to the receiving device. Actions, such as contact, turning or dragging, match behavioral habits of a user, and therefore the data transmission method in the embodiments of the present invention can actively recognize a data transmission intention of the user, and,, implements transmission of the data to be transmitted to the receiving device when the data transmission intention of the user is recognized, which is convenient for the user to implement data transmission. For example, when a user wants to transmit a picture in a data transmission device to a receiving device, the user can firstly select the picture to be transmitted as data to be transmitted, and then allow the data transmission device to get in gentle contact with the receiving device or turn the data transmission device, so as to easily implement transmission of the picture to be transmitted to the receiving device. The following describes the data transmission method in the embodiments of the present invention in detail with reference to the accompanying drawings.

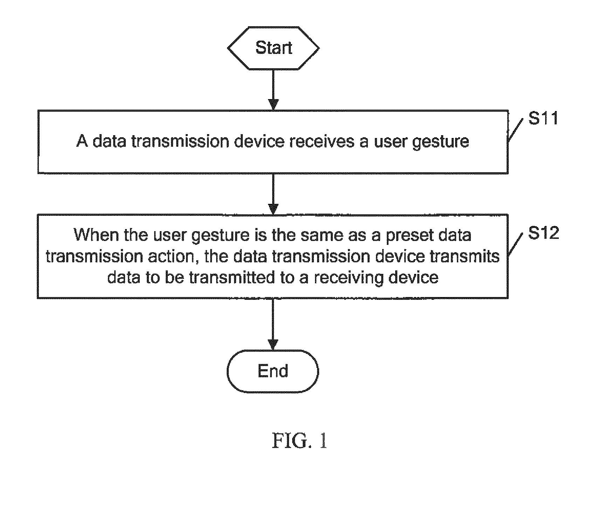

Refer to FIG. 1, which is a schematic flowchart of a first embodiment of the data transmission method according to the present invention, where the method includes:
Step S11: A data transmission device receives a user gesture.
Step S12: When the user gesture in step S11 is the same as a preset data transmission action, the data transmission device transmits data to be transmitted to a receiving device.

The user gesture mainly includes a gesture of contact between the data transmission device and the receiving device, a gesture of turning of the data transmission device, and a gesture of dragging of the data to be transmitted. Accordingly, the preset data transmission action includes at least one of a contact action between the data transmission device and the receiving device, a turning action on the data transmission device, and a dragging action on the data to be transmitted. The data to be transmitted may be an audio file, a video file, a picture, a word document or the like in the data transmission device, and data in the data transmission device can be shared with the receiving device by transmitting the data to be transmitted to the receiving device. Optionally, by default, the data to be transmitted may be a file displayed in a current display interface, or a user may be prompted to select a file, which is not limited in the embodiment of the present invention.

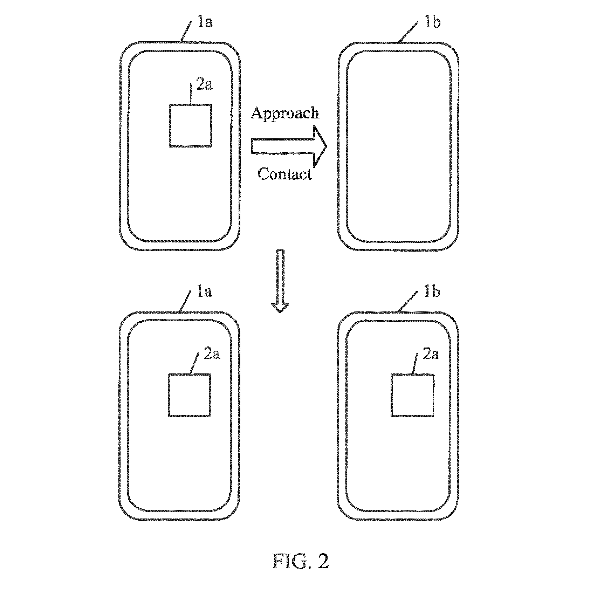

In step S11, the reception of the user gesture may be implemented by a sensor such as a gravity sensor or a gyroscope built in the data transmission device. When the sensor receives the user gesture, the sensor transmits the user gesture to a processor, such as a CPU (Central Processing Unit, central processing unit), in the data transmission device. The processor compares the user gesture with the preset data transmission action, and if they are the same or have a certain correlation, transmits the data to be transmitted to the receiving device. It should be noted that: the user gesture received by the processor from the sensor is usually unlikely to be completely the same as the preset data transmission action; therefore, when a same part of the user gesture and the preset data transmission action exceeds a certain threshold (the threshold may be flexibly set according to a required precision, which is not limited in the embodiment of the present invention), the user gesture and the preset data transmission action can be considered to be the same. The following continues to describe a process of implementing data transmission in the embodiment of the present invention with reference to the accompanying drawings FIG. 2 to FIG. 4.

As shown in FIG. 2, when a user needs to transmit a word document 2a in a data transmission device 1a to a receiving device 1b, the user may hold the data transmission device 1a after clicking the word document 2a to select it, and then move the data transmission device 1a towards the receiving device 1b so that the data transmission device 1a gently contacts with the receiving device 1b. At this time, a sensor in the data transmission device 1a, such as an acceleration sensor, a proximity sensor, or a pressure sensor, will gather a collected movement signal and contact signal to a processor in the data transmission device 1a. The processor can know the user gesture according to the movement signal and the contact signal reported by the sensor, find that the user gesture is one of the preset data transmission actions, and then immediately trigger a data transmission operation to transmit the word document 2a to the receiving device 1b.

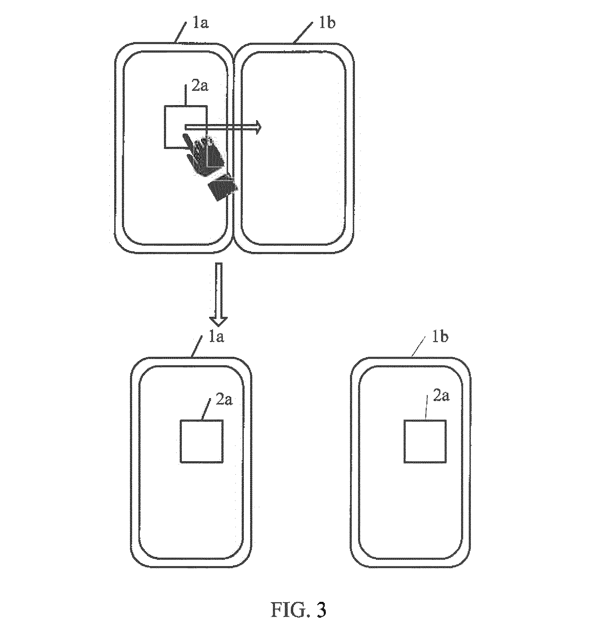

As shown in FIG. 3, when the user needs to transmit the word document 2a in the data transmission device 1a to the receiving device 1b, the user may continue to press and hold the word document 2a after clicking the word document 2a to select it, and then drag it towards the receiving device 1b. At this time, a touch screen in the data transmission device 1a transmits a collected dragging signal of the word document 2a to the processor. The processor can know that the user gesture is a dragging action on the word document 2a according to the dragging signal, find that the user gesture is the same as one of the preset data transmission actions, and then immediately trigger a data transmission operation to transmit the word document 2a to the receiving device 1b. It should be noted that, a dragging action on a file in the data transmission device 1a taken by a user may appear in many application occasions, and therefore, in order to prevent considering file dragging actions taken by the user for other purposes as data transmission, an additional restricting condition may be added to this condition, for example, a requirement that a distance between the data transmission device 1a and the receiving device 2a be near enough, like a distance between them shown in FIG. 3.

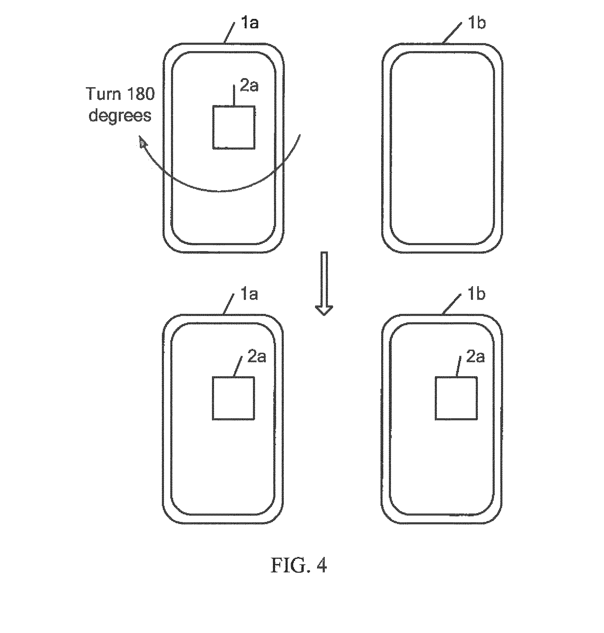

As shown in FIG. 4, when the user needs to transmit the word document 2a in the data transmission device 1a to the receiving device 1b, the user may turn the data transmission device 1a for 180 degrees after clicking the word document 2a to select it. At this time, a sensor in the data transmission device 1a transmits a collected turning signal of the data transmission device 1a to the processor. The processor can know that the user gesture is a turning action on the data transmission device 1a according to the turning signal, find that the user gesture is the same as one of the preset data transmission actions, and then immediately trigger a data transmission operation to transmit the word document 2a to the receiving device 1b.

In the embodiment of the present invention, when a user gesture received by the data transmission device is the same as or has a certain correlation with a preset data transmission action, for example, when the received user gesture is the same as or has a certain correlation with any one of a contact action between the data transmission device and the receiving device, a turning action on the data transmission device, and a dragging action on the data to be transmitted, the data transmission device transmits the data to be transmitted to the receiving device, so as to implement data transmission. By using the data transmission method in the embodiment of the present invention, data transmission can be implemented conveniently and quickly, which is convenient for users to use and improves user experience.

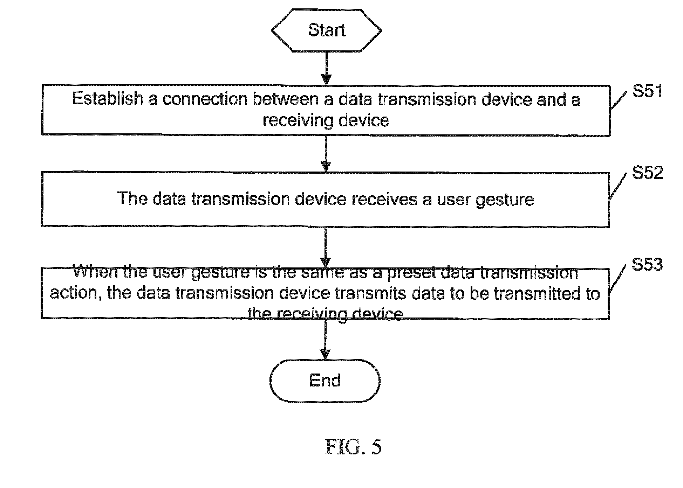

Refer to FIG. 5, which is a schematic flowchart of a second embodiment of the data transmission method according to the present invention. The embodiment illustrated in FIG. 5 is a supplement to the embodiment illustrated in FIG. 1, and its main principle is to establish a connection to a receiving device before a data transmission device receives a user gesture. The method includes:

Step S51: Establish a connection between a data transmission device and a receiving device.

The connection established between the data transmission device and the receiving device is preferably a D2D connection which includes but is not limited to NFC, BT, infrared or WiFi Direct. The following describes a process of establishing a D2D connection between the data transmission device and the receiving device by using NFC as an example.

Preconditions for establishing an NFC connection between the data transmission device and the receiving device are that the data transmission device and the receiving device both support the NFC function and their NFC functions are both enabled. Under the foregoing conditions, when the receiving device enters a sensing scope of the data transmission device, the data transmission device can find the receiving device by a search, and then actively establish an NFC connection to the receiving device. It should be noted that the process of establishing an NFC connection is obvious for a person skilled in the art, so details are not described herein again.

Step S52: The data transmission device receives a user gesture.

Step S53: When the user gesture in step S52 is the same as or has a certain correlation with a preset data transmission action, the data transmission device transmits data to be transmitted to the receiving device.

Specifically, in step S53, the data to be transmitted is transmitted to the receiving device through the connection (preferably D2D connection) established in step S51.

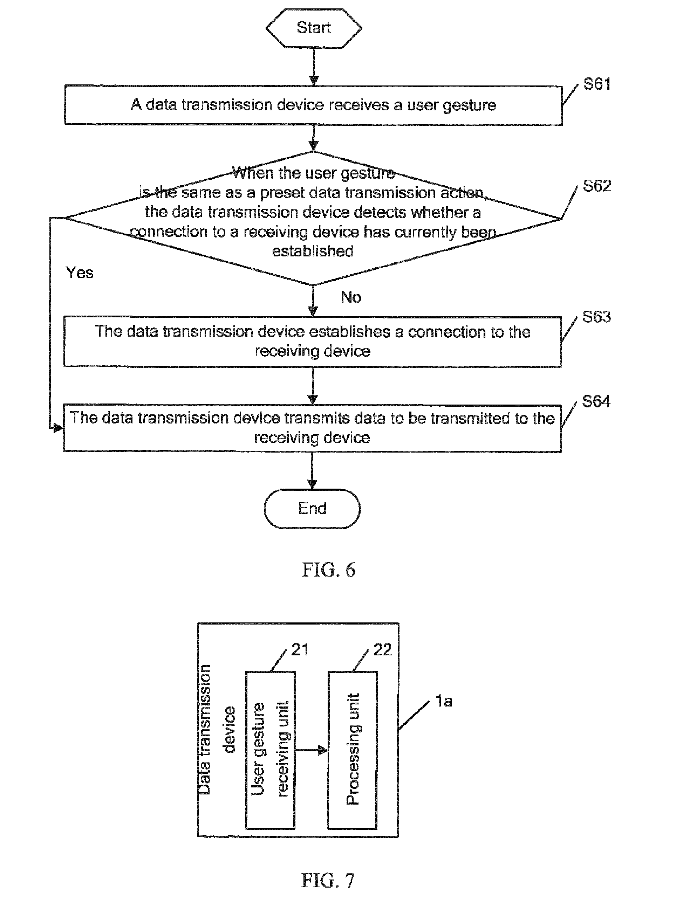

Refer to FIG. 6, which is a schematic flowchart of a third embodiment of the data transmission method according to the present invention. The embodiment illustrated in FIG. 6 is a supplement to the embodiment illustrated in FIG. 1. Its main principle is to determine whether a data transmission device has been connected to a receiving device when a received user gesture is the same as a preset data transmission action, and if the data transmission device is not connected to the receiving device, to establish a connection first. The method includes:
Step S61: A data transmission device receives a user gesture.
Step S62: When the user gesture in step S61 is the same as or has a certain correlation with a preset data transmission action, the data transmission device detects whether a connection to the receiving device has currently been established.

In this step, if the detection result is yes, which indicates that the data transmission device detects that no connection to the receiving device has been established in step S63, step S63 is performed; and, if the detection result is no, which indicates that the data transmission device detects that a connection to the receiving device has been established in step S63, step S64 is performed directly.

Specifically, the connection between the data transmission device and the receiving device is preferably a D2D connection.

Step S63: The data transmission device establishes a connection to the receiving device, and goes to perform step S64.

Step S64: The data transmission device transmits data to be transmitted to the receiving device.

Corresponding to the foregoing method embodiments, the following continues to describe a structure of a data transmission device in the embodiments of the present invention with reference to the accompanying drawings.

FIG. 7 is a schematic structural diagram of a data transmission device according to an embodiment of the present invention. The data transmission device 1a includes a user gesture receiving unit 21 and a processing unit 22.

The user gesture receiving unit 21 is configured to receive a user gesture.

The processing unit 22 is configured to: when the user gesture received by the user gesture receiving unit 21 is the same as a preset data transmission action, transmit data to be transmitted to a receiving device.

The user gesture mainly includes a gesture of contact between the data transmission device and the receiving device, a gesture of turning of the data transmission device, and a gesture of dragging of the data to be transmitted, Accordingly, the preset data transmission action includes at least one of a contact action between the data transmission device 1a and the receiving device, a turning action on the data transmission device 1a, and a dragging action on the data to be transmitted. The data to be transmitted may be an audio file, a video file, a picture, a word document, or the like in the data transmission device, and data in the data transmission device can be shared with the receiving device by transmitting the data to be transmitted to the receiving device. Optionally, by default, the data to be transmitted may be a file displayed in a current display interface, or a user may be prompted to select a file, which is not limited in the embodiment of the present invention.

Specifically, the user gesture receiving unit 21 may be implemented by a sensor such as a gravity sensor or a gyroscope built in the data transmission device 1a. When the user gesture receiving unit 21 receives the user gesture, the user gesture is transmitted to the processing unit 22. The processing unit 22 may include a processor and a transmitter, where the processor is configured to compare the user gesture with the preset data transmission action, and if they are the same, the transmitter will transmit the data to be transmitted to the receiving device. It should be noted that: the user gesture received by the processor from the user gesture receiving unit 21 is usually unlikely to be completely the same as the preset data transmission action; therefore, when a same part of the user gesture and the preset data transmission action exceeds a certain threshold (the threshold may be flexibly set according to a need), the user gesture and the preset data transmission action can be considered to be the same. The following continues to describe a process of implementing data transmission in the embodiment of the present invention with reference to the accompanying drawings FIG. 2 to FIG. 4.

As shown in FIG. 2, when a user needs to transmit a word document 2a in the data transmission device 1a to the receiving device 1b, the user may hold the data transmission device 1a after clicking the word document 2a to select it, and then move the data transmission device 1a towards the receiving device 1b so that the data transmission device 1a gently contacts with the receiving device 1b. At this time, the sensor (the user gesture receiving unit 21) in the data transmission device 1a will gather a collected movement signal and contact signal to the processor in the data transmission device 1a. The processor can know the user gesture according to the movement signal and the contact signal reported by the sensor, find that the user gesture is one of the preset data transmission actions, and then immediately trigger a data transmission operation to transmit the word document 2a to the receiving device 1b by using the transmitter.

As shown in FIG. 3, when the user needs to transmit the word document 2a in the data transmission device 1a to the receiving device 1b, the user may continue to press and hold the word document 2a after clicking the word document 2a to select it, and then drag it towards the receiving device 1b. At this time, the sensor (the user gesture receiving unit 21) in the data transmission device 1a transmits a collected dragging signal of the word document 2a to the processor. The processor can know that the user gesture is a dragging action on the word document 2a according to the dragging signal, find that the user gesture is the same as one of the preset data transmission actions, and then immediately trigger a data transmission operation to transmit the word document 2a to the receiving device 1b by using the transmitter. It should be noted that, a dragging action on a file in the data transmission device 1a taken by a user may appear in many application occasions, and therefore, in order to prevent considering file dragging actions taken by the user for other purposes as data transmission, an additional restricting condition may be added to this condition, for example, a requirement that a distance between the data transmission device 1a and the receiving device 2a be near enough, like a distance between them shown in FIG. 3.

As shown in FIG. 4, when the user needs to transmit the word document 2a in the data transmission device 1a to the receiving device 1b, the user may turn the data transmission device 1a for 180 degrees after clicking the word document 2a to select it, At this time, the sensor (the user gesture receiving unit 21) in the data transmission device 1a transmits a collected turning signal of the data transmission device 1a to the processor. The processor can know that the user gesture is a turning action on the data transmission device 1a according to the turning signal, find that the user gesture is the same as one of the preset data transmission actions, and then immediately trigger a data transmission operation to transmit the word document 2a to the receiving device 1b.

In the embodiments of the present invention, when the user gesture received by the data transmission device is the same as the preset data transmission action, for example, when the received user gesture is the same as any one of a contact action between the data transmission device and the receiving device, a turning action on the data transmission device, and a dragging action on the data to be transmitted, the data transmission device transmits the data to be transmitted to the receiving device, so as to implement data transmission. By using the data transmission method in the embodiment of the present invention, data transmission can be implemented conveniently and quickly, which is convenient for users to use and improves user experience.

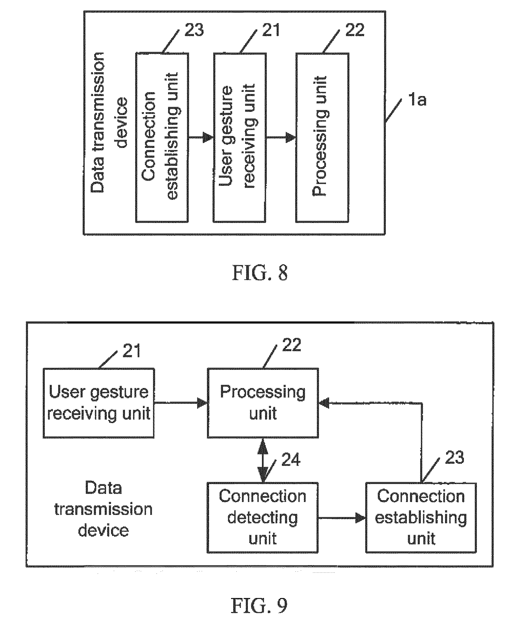

Refer to FIG. 8, which is a schematic structural diagram of the data transmission device according to a second embodiment of the present invention. Compared with the data transmission device 1a illustrated in FIG. 7, the data transmission device in FIG. 8 further includes:
a connection establishing unit 23, configured to establish a connection to the receiving device before the user gesture receiving unit 21 receives the user gesture.

Specifically, the connection establishing unit 23 preferably establishes a D2D connection to the receiving device, where the D2D connection includes but is not limited to NFC, BT, infrared or WiFi Direct. The following describes a process of establishing a D2D connection between the connection establishing unit 23 and the receiving device by using NFC as an example.

Preconditions for establishing an NFC connection between the connection establishing unit 23 and the receiving device are that the connection establishing unit 23 and the receiving device both support the NFC function and their NFC functions are both enabled. Under the foregoing conditions, when the receiving device enters a sensing scope of the connection establishing unit 23, the connection establishing unit 23 can find the receiving device by a search, and then actively establish an NFC connection to the receiving device. It should be noted that the process of establishing an NFC connection is obvious for a person skilled in the art, so details are not described herein again.

Refer to FIG. 9, which is a schematic structural diagram of the data transmission device according to a third embodiment of the present invention. Compared with the data transmission device illustrated in FIG. 7, the data transmission device in FIG. 9 further includes:
a connection detecting unit 24, configured to, when the user gesture is the same as the preset data transmission action, detect whether a connection to the receiving device has currently been established; and
a connection establishing unit 23, configured to, when the connection detecting unit 24 detects that no connection to the receiving device has been established, establish a connection to the receiving device. Specifically, the connection establishing unit 23 preferably establishes a D2D connection to the receiving device.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

The foregoing discloses merely exemplary embodiments of the present invention, which are not intended to limit the protection scope of the present invention. A persons of ordinary skill in the art may understand that all or a part of the processes in the embodiments, and equivalent variations made with reference to the claims of the present invention shall also fall within the protection scope of the present invention.

## Claims

1. A data transmission method, comprising:
receiving, by a data transmission device, a user gesture; and
transmitting, by the data transmission device when the user gesture is the same as a preset data transmission action, data to be transmitted to a receiving device.

2. The method according to claim 1, wherein the preset data transmission action comprises at least one of a contact action between the data transmission device and the receiving device, a turning action on the data transmission device, and a dragging action on the data to be transmitted.

3. The method according to claim 1 or 2, wherein, before the receiving, by a data transmission device, a user gesture, the method further comprises:
establishing, by the data transmission device, a connection to the receiving device.

4. The method according to claim 1 or 2, wherein, after the user gesture received by the data transmission device is the same as the preset data transmission action and before the data transmission device transmits the data to be transmitted to the receiving device, the method further comprises:
detecting, by the data transmission device, whether a connection to the receiving device has currently been established; and
when the data transmission device has not established a connection to the receiving device, establishing, by the data transmission device, a connection to the receiving device.

5. A data transmission device, comprising:
a user gesture receiving unit, configured to receive a user gesture; and
a processing unit, configured to, when the user gesture received by the user gesture receiving unit is the same as a preset data transmission action, transmit data to be transmitted to a receiving device.

6. The data transmission device according to claim 5, wherein the preset data transmission action comprises at least one of a contact action between the data transmission device and the receiving device, a turning action on the data transmission device, and a dragging action on the data to be transmitted.

7. The data transmission device according to claim 5 or 6, further comprising:
a connection establishing unit, configured to establish a connection to the receiving device before the user gesture receiving unit receives the user gesture.

8. The data transmission device according to claim 5 or 6, further comprising:
a connection detecting unit, configured to, after the user gesture received by the user gesture receiving unit is the same as the preset data transmission action and before the processing unit transmits the data to be transmitted to the receiving device, detect whether a connection to the receiving device has currently been established; and
a connection establishing unit, configured to, when the connection detecting unit detects that no connection to the receiving device has been established, establish a connection to the receiving device.
